# EUROPEAN PATENT APPLICATION

(11) **EP 2 168 649 A1**
(43) Date of publication of application: **31.03.2010**
(21) Application number: 09171067.3
(22) Date of filing: 23.09.2009
(51) Int. Cl.: B01D 29/01, B01D 29/07, B31D 5/00

(54) **Process and device for manufacturing orthogonal filters.**

(30) Priority: 24.09.2008 IT TO20080700
(71) Applicant: OFFICINE METALLURGICHE G. CORNAGLIA S.p.A., 10092 Beinasco (IT)
(72) Inventor: Cornaglia, Umberto, 10027 Moncalieri (T0) (IT); Rocca, Giorgio, 10131 Torino (IT)
(74) Representative: Robba, Pierpaolo

(57) **Abstract**

In the process according to the invention, an orthogonal filter is manufactured by a knife folding machine. An orthogonal filter comprises a succession of corrugated and non-corrugated sheets which are assembled so as to form a pack or roll. The corrugations form a plurality of channels arranged side by side and having alternately open and closed ends, so as to force the fluid, which is to be filtered, to cross the channel walls. According to the invention, the knife folding machine comprises a folding channel (113) and two folding knives (111A, 111B) which carry out a translation, or combined rotation and translation, movement and push the sheet (103) to be corrugated into the folding channel (113). The invention also relates to an apparatus for manufacturing orthogonal filters.

## Description

### Technical field of the invention

The present invention relates to a process and an apparatus for manufacturing so-called "orthogonal" filters which can be used, for instance, for filtering air, oil or other liquids and gases in internal combustion engines.

### Prior Art

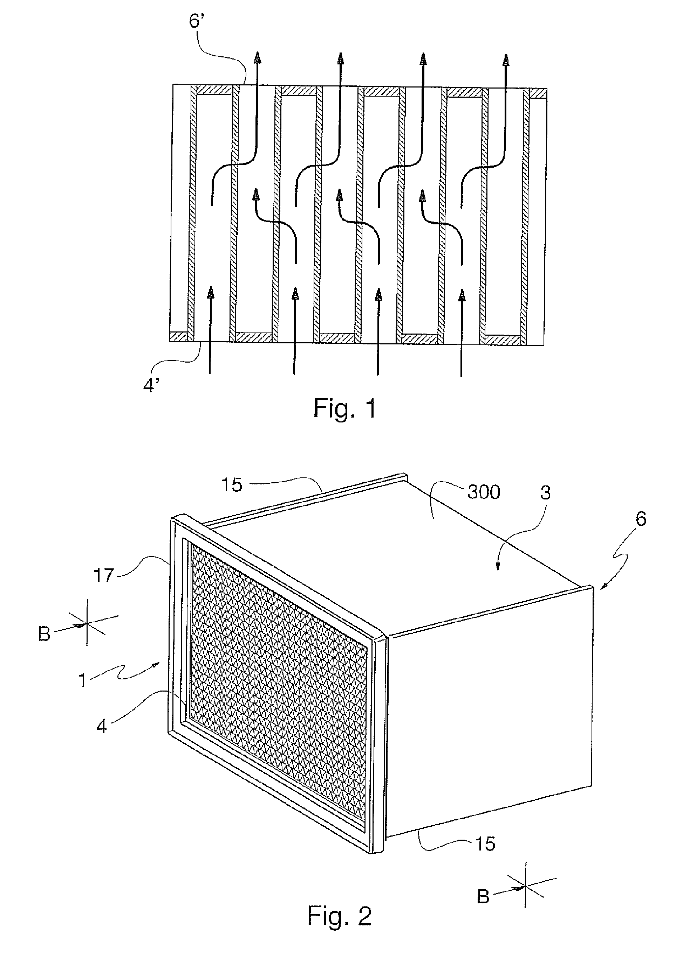

A currently known air filter type is the so-called "orthogonal filter", which is named in such a manner due to the path followed by the air to be filtered. An orthogonal filter example is described, for instance, in WO 83/01582. An orthogonal filter is obtained from stacking corrugated sheets made of an appropriate filtering material - e.g. paper - which are alternated with non-corrugated sheets made of filtering material, so as to form a stack, or pack, which substantially has the shape of a parallelepiped or prism. Such pack, which composes the so-called "filtering element" of a filter cartridge, defines:
- an upstream face 4' arranged for being crossed by air which is still to be filtered and arranged for facing the dirty air region of the filtering system; and
- a downstream face 6' arranged for releasing the filtered air and arranged for facing the clean air region of the filtering system (Figure 1).
   The smooth and corrugated paper sheets are superimposed in such a manner to form a plurality of crests and troughs respectively arranged side by side. Each trough has an open end and a closed end, and extends from the upstream face 4' to the downstream face 6'.
   In each layer, formed by a corrugated sheet and a non-corrugated sheet, each trough which has a closed end facing the upstream or downstream face 4' or 6' is adjacent to at least one trough which has an open end facing the same upstream or downstream face; during filtration this feature forces air, or another fluid, to cross the lateral walls of the channels and the filtering material sheets before leaving the filter. The orthogonal filters are currently used for the air to be filtered before being admitted into internal combustion engine for large goods vehicles, such as lorries and road tractors, or in order to filter air to be admitted in gas turbines.
   Manufacturing processes for making such filter type are known from US 3,025,963 e WO 97/40908: in such processes the corrugated paper is obtained from making a paper band pass through a calender provided with rollers having grooved outer surfaces. Such process allows attaining high productiveness. The inventors of the present invention have noticed that such process has not proven to be particularly suitable for manufacturing a wide range of corrugations, e.g. by changing the crest height or shape.
   As a matter of fact, in order to make corrugations having different shapes, it is necessary to have different calendering cylinders.
   The smaller and more different the production batches are, the more this drawback become remarkable.
   An object of the present invention is to provide a production process which is more suitable than the known processes for manufacturing orthogonal filters having corrugation shapes with a relatively wide and differentiated range, and suitable for the production in small batches.
   JP 1 018 414 relates to a process which is only aimed at folding a filtering material sheet and which uses a pair of folding knives located before a folding channel provided between two heating plates.
   FR-A-2 192 492 relates to a process for making a filter and only describes the paper folding operation achieved by making a filtering material band pass between two cylinders provided with gear teeth meshing together. However such document cites as prior art a process using an alternative movement carried out by two folding knives located and acting in opposed positions with respect to a band made of a material to be corrugated. Such knives fold and push the filtering material band or sheet into a folding channel by means of such folding knives.
   EP 0 995 474 relates to a process and an apparatus for manufacturing filtering material in one or more different configurations, in order to form a new filtering construction starting from fibre material. The fibre material is feed and heated on a rotary collector drum having an interchangeable peripheral structure having an adequate corrugated shape. In such a manner the fibre material shaping is carried out and an exiting pleated sheet is obtained from the drum. Such document describes the use of a pair of respectively aligned belt conveyers having the task to receive and to move forward the corrugated band which is be subjected to further treatments.

### Summary of the invention

Such an object is achieved, according to a first aspect of the invention, by a process for manufacturing so-called orthogonal filters having the features of claim 1.

According to a second aspect of the invention, the above discussed object of the invention is achieved by an apparatus for manufacturing so-called orthogonal filters having the features of claim 5.

In particular, none of the above cited documents, taken alone or in combination, illustrates a process or an apparatus which is intended for manufacturing orthogonal filters and uses the synergistic combination of the distinguishing features cited in the respective characterising portions of the above-mentioned claims 1 and 5 in order to solve the above cited object of the invention.

According to a particular embodiment, the bonding system is arranged for bonding the first and second sheet of filtering material by gluing or welding.

According to a particular embodiment, the bonding system is arranged for bonding the first and second sheet of filtering material by superimposing them one on the other.

The advantages obtainable by the present invention will result more clear to the skilled man from the following detailed description of a particular and non-limitative embodiment, which is given with reference to the following schematic drawings.

### Brief description of the drawings

Figure 1 shows a cross-section of a so-called known "orthogonal filter" for air, according to a section plane which is parallel to the direction dirty air side - clean air side;
Figure 2 shows a perspective view of a so-called orthogonal filter according to a particular embodiment of the present invention;
Figure 3 shows a perspective view of an apparatus for manufacturing so-called orthogonal filters, according to a particular embodiment of the present invention;
Figures 4A-4F show some steps during an operation sequence of the folding knives and the folding channel of the apparatus of Figure 3;
Figure 5 shows a transverse section of the apparatus of Figure 3 taken along a section plane X-Z;
Figure 6 shows a perspective view of a portion of the apparatus of Figure 3, which is located downstream of the folding channel; and
Figure 7 shows, as a perspective view, a step during the assembling operation of the filtering element for an orthogonal filter manufactured according to the present invention.

### Detailed description

Figures 1 and 2 show a cartridge for an orthogonal filter which can be manufactured by a manufacturing process according to the present invention.

Such cartridge, denoted by the overall reference 1, comprises a filtering element 3 substantially having a parallelepiped-like shape and defining an upstream face 4 arranged for receiving air - or another fluid - to be filtered, and a downstream face 6 arranged for releasing air - or another fluid - not filtered.

The filtering element 3 is obtained from stacking a plurality of corrugated sheets of filtering paper alternated with a plurality of planar, or somehow not-corrugated, sheets of filtering paper.

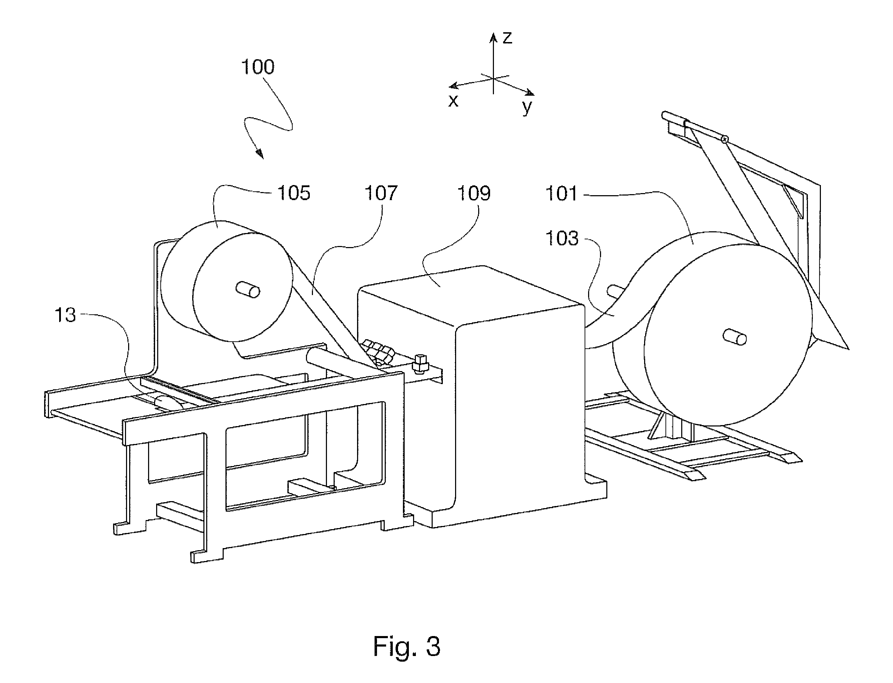

Figure 3 shows an overall view of a folding and bonding unit according to a particular embodiment of the present invention, which is intended for manufacturing corrugated sheets of paper and bonding each of them to a smooth sheet of paper.

Such unit, denoted by the overall reference 100, comprises a first roll 101, from which a first filtering paper band 103 to be corrugated is rolled out, and a second roll 105, from which a second filtering paper band 107 is not rolled out and will not be corrugated during the filter manufacture.

According to an aspect of the present invention, the band 103 to be corrugated is corrugated by means of a so-called knife folding machine.

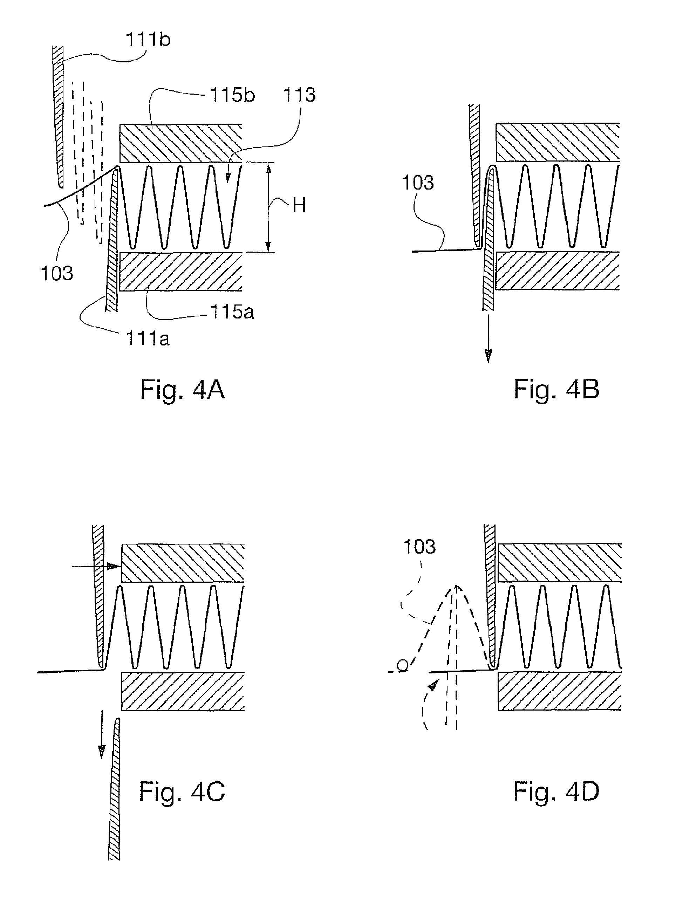

Examples of such folding machines are per se known and are described, for instance, in US 2005/257655 A1, DE 195 38 519 A1, DE 200 06 605 U1. A folding machine, usable in order to carry out the present invention and denoted by the overall reference 109, comprises two - or in case more - folding knives 111A, 111B which are located on opposite sides with respect to the band 103 made of material to be folded (Figures 4A-4F) during operation; the folding machine 109 further comprises a folding channel 113 defined by two plates 115A, 115B and located downstream of the two folding knives. Both folding knives 111A, 111B, which are operated by adequate kinematic mechanisms (not shown), can operate according to the following sequence.

At the beginning the lower knife 111A, located below the band 103 to be folded, almost completely closes the inlet of the folding channel 113, covering the edge of the lower plate 115A and bringing its edge almost at the same height of the edge of the upper plate 115B (Figure 4A).

Subsequently the upper knife 111B, located above the band 103 to be folded, goes down, approaches and is placed before the lower knife 111A, bringing its edge almost at the same height of the edge of the lower plate 115A (Figure 4B); in this manner a section of the band 103 to be folded is pinched between the two knives 111A, 111B and folded in a U-shape above the lower knife 111A.

Afterwards the lower knife 111A slips away and goes down in a vertical direction, and the upper knife 111B pushes the corrugated band 103' into the folding channel 113 following a horizontal - or at least parallel to the folding channel 113 - movement, almost abutting against the edge of the upper plate 115B and almost touching the edge of the lower plate 115A (Figure 4C).

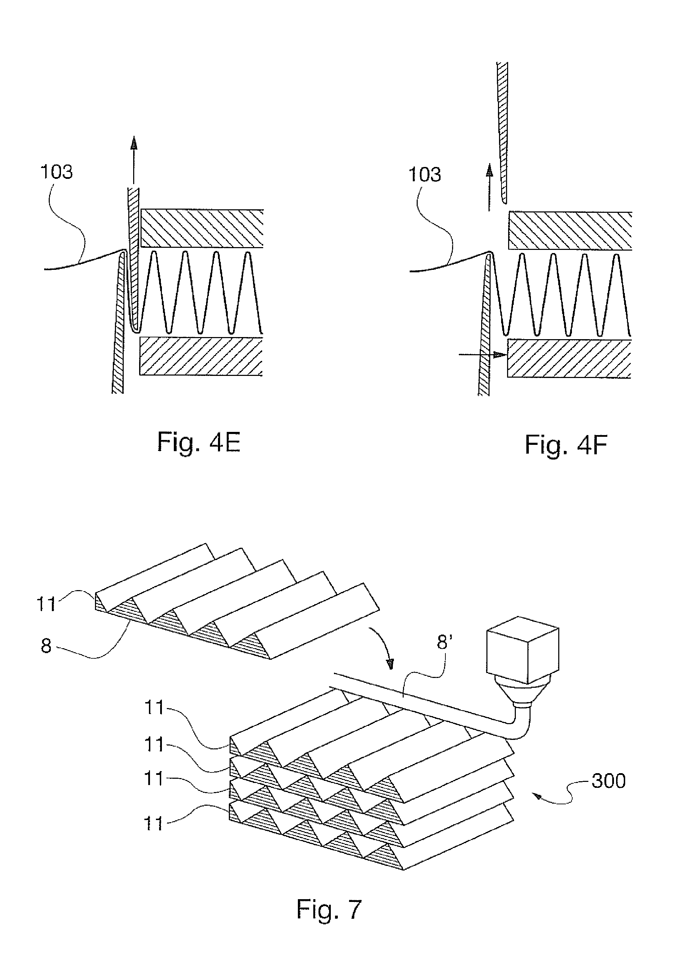

At this time each of the upper and lower knife 111A, 111B performs the movements which have been previously described for the other knife - respectively 111B or 111A: moving in a somewhat semicircular motion, the lower knife 111A goes upwards, approaches, is placed before the upper knife 111B, and almost touches, with its edge, the edge of the upper plate 115B (Figures 4D, 4E); in this manner a new section of the band 103 to be folded is pinched between the two knives 111A, 111B and folded in a U-shape above the upper knife 111B.

Subsequently the upper knife 111B slips away in a vertical translation (Figure 4E) and the lower knife 111A pushes the newly-formed fold in the folding channel 113 (Figure 4F). The sequence can thus continue with the movements shown in Figure 4A. Clearly, during the sequence which has just been described, the band 103 to be folded is not pinched between the edges of the knives 111A, 111B and the edges of the plates 115A, 115B.

Advantageously, the folding machine 109 is provided with an adjustment system for varying in a reversible manner the distance between the plates 115A and 115B in a direction which is substantially perpendicular to the blade of the knives 111A, 111B - i.e. the so-called folding channel height - and/or the travel of the knives 111A, 111B in a vertical direction - or somehow in a direction which is perpendicular to the direction along which the folding channel 113 extends. Such adjustment system allows to vary the height H of the corrugation (Figure 4A) at extremely low costs which are practically limited to the sole machine downtime. The knife folding machines can generally be provided with similar adjustment systems more easily and at lower costs than other machines for folding filtering material sheets, such as for instance the calendering machines described in US 3,025,963 and WO 97/40908 cited above.

It can be further noted that in the embodiment shown in Figures 4A-4F the blade of the folding knives 111A, 111B is substantially formed as a sharp edge, but in other embodiments, not shown, it can also be squared or more or less rounded, for example with a radius included between 0,5mm and 4mm, or between 0,1 times or 0,5 times the corrugation height, so as to corrugate the filtering material with rounded corrugations. In order to switch from manufacturing orthogonal filters having channels with triangular cross-section to the manufacture of filters having channels with substantially sinusoidal - or somehow very rounded - section, it is sufficient to assemble knives having different cross-sections to folding machine; this generally involves expenses and/or set-up times which are considerably smaller than those due to the substitution of the grooved cylinders in the calenders disclosed in US 3,025,963 e WO 97/40908.

Therefore a knife folding machine generally consents to considerably reduce the production set-up costs when orthogonal filters having channels with different dimension and shapes have to be manufactured.

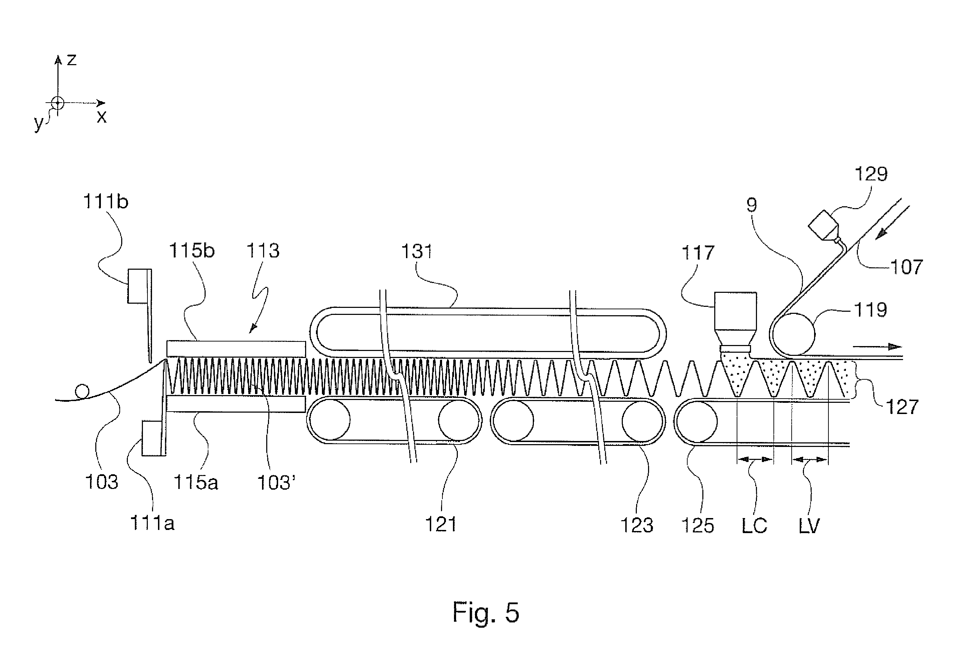

Advantageously, the unit 100 is further provided with a system for bonding the corrugated band 103' to the non-corrugated band 107 in order to make a semifinished product usable for the production of the so-called "orthogonal filters". Such system, shown in Figure 5, comprises the sealing glue dispenser 117, the belt conveyers 121, 123, 125 and the bonding roller 119.

The corrugated band 103' exiting from the folding channel 113 is conveyed and forwarded by means of the belt conveyers 121, 123, 125. Such conveyers are operated by means of suitable motors, e.g. by means of brushless electrical motors.

Since the corrugated band 103' exits from the folding channel 113 with very compact folds, the belt conveyer 123 runs at a higher speed than the belt conveyers 121 and 125, so as to widen the folds of the band 103' when the latter passes from the belt conveyer 121 to the belt conveyer 123.

The belt conveyer 125 runs at an adequate speed, lower than that of the belt conveyer 123, so as to suitably narrow the folds of the band 103' during the passage from the belt conveyer 123 to the belt conveyer 125. In such a manner it is possible to bring the corrugation trough and crest widths - respectively LV, LC - to the desired value simply by conveniently choosing the running speeds of the belt conveyers 121, 123, 125

Advantageously the unit 100 is provided with one or more containment pressure member 131 located downwards of the folding channel. Each containment pressure member 131 substantially has the shape of an elongated pad longitudinally arranged above the belt conveyer 121, 123, and it is arranged for vertically containing the corrugated band 103', avoiding that it gets back to its undeformed state without corrugations before it is glued to the non-corrugated band 107. As a matter of fact, in room conditions the paper of the bands 103 does not often exhibit shape memory properties; in order to maintain plies or other deformations without needing outer mechanical constraints, such paper is currently cured in oven which causes the release of phenol contained in the paper itself and thus removes the possible paper elastic returns after folding.

Owing to the containment pressure members 131, the treatment in oven can be carried out after both corrugated and non-corrugated band 103' and 107 are glued together, and in particular after the glue has sufficiently cooled down.

In the present embodiment, adequate guides (not shown) fasten the containment pressure members 131 to the frame of the unit 100 and allow them to freely move in a vertical direction; thus the weights 131 must have an adequate weight which allows them to lay on the corrugated paper band and to keep the latter sufficiently pressed, while allowing at the same time the running of such corrugated paper band. Therefore they can be advantageously loaded with variable weights 132.

Preferably the containment pressure elements 131 has rounded ends in order to make easier the insertion and running of the band 103'.

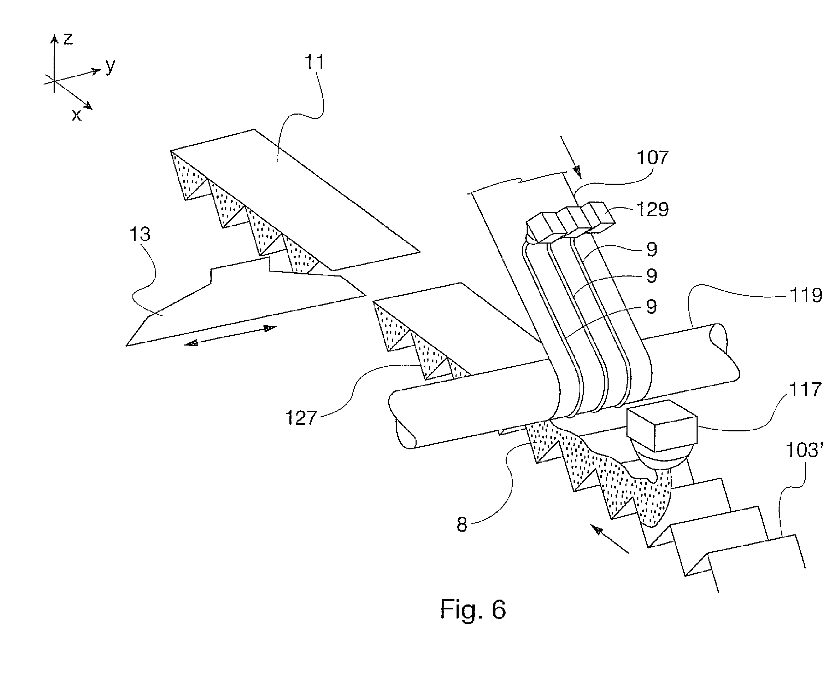

A first dispenser 117 (Figures 5, 6) is situated downstream of the endless conveyer 123 and lays a sealing glue seam or line 8 on the corrugated sheet 103' and along an edge thereof.

In the present description, the word "glue" is to be intended as any adhesive substance which is capable of fixing together two objects. Such adhesive substance can be, for instance, an simple polymeric resin, thermoplastic or thermosetting, which is applied in fluid state on the parts to be connected and is then made to reticulate, or somehow to harden. A "glue" according to the present description can reticulate, or somehow harden, without releasing solvents, as an effect of the sole temperature. For example, according to the present invention a hot-melt polyamide based glue can be used as sealing glue or tacking glue, which will be more extensively described below.

Starting again from the description of Figures 5, 6, downstream of the dispenser 117 the bonding roller 119 makes the non-corrugated band 107 to adhere to the corrugated band 103'; by means of the sealing glue 8, both bands are permanently bonded so as to for a semifinished band 127 which is also named as "composite band" in the present description. The sealing glue 8 further closes in a substantially leak-tight manner one of the two transverse channel ends of the composite band 127 which are formed by the corrugations of the band 103'. For instance, the bonding roller 119 can be motorized so as to drag the band 107 which is located upstream thereof and to push the composite band 127.

The composite band 127 is subsequently cut in rectangular pieces 11 by means of the cutter 13 (Figure 6); such pieces will be referred to as "semifinished pieces 11" in the present description.

A plurality of semifinished pieces 11 is therefore stacked so as to form a pack 300 having a substantially parallelepiped-like shape. As they are superimposed one on the other while the respective non-corrugated sheets are facing downwards, the semifinished pieces 11 are glued by means of further sealing seams 8' laid on the edges of the pieces 11 which are located in opposite position with respect to those on which is located the sealing glue seams which bonded together the corrugated sheet and non corrugated sheet of the composite band 127 (Figure 7). In such a manner, each layer can compose the succession of the channels which are alternately opened at the upstream and downstream face, and which force air to follow the path outlined in Figure 1.

In order to avoid that air to be filtered outflows from the sides of the filter 1, two lateral plates 15 are glued in a leak-tight manner on the lateral faces of the filtering element, at the edges of the different corrugated and non-corrugated sheets 103', 107 (Figura 2). In this manner, excluding some negligible leakage, nearly all the air entering into the filtering element from the upstream face 4 outflows from the downstream face 6.

Coming back to the description of Figure 6, second dispensers 129 are advantageously located downstream of the belt conveyer 123 and are arranged for laying further glue seam or lines 9, hereinafter referred to as "tacking glue seam 9", on the non-corrugated band 107.

The tacking glue seams 9 are arranged lengthwise of the band 107, are appropriately spaced-apart from the edges thereof, and have the sole task to keep together the corrugated and non-corrugated sheets of paper when they are bonded downstream of the roller 119, avoiding that they open as a book and therefore making the pieces 11 more compact and easier to be worked during the filter manufacturing. The glue seams 9 do not have the task to glue the corrugation tops to the non-corrugated sheet over the whole length of such corrugations; therefore the air which passes through the filter 1 can move from a channel to an adjacent channel by flowing over such corrugations. Thus the filter manufacturing is simplified and the filter efficiency is improved.

Laying the tacking glue seams 9 on the non-corrugated band 107 is preferable than laying them on the corrugated band 103': in the latter case, the tacking seams 9, which are laid in fluid state, could accumulate on the trough bottoms between the different corrugations, reducing the passage cross-section of the filter channels, generating undesired turbulences and, particularly, gluing in an insufficient manner - or poorly soaking - the corrugation tops.

The above described embodiments can be subjected to different modifications and alterations without departing from the scope of protection of the present invention. For instance, according to an embodiment not shown, the corrugated and non-corrugated filtering material band 103' and 107, instead of being cut in sheets to be subsequently stacked, can be simply rolled up together so as to form a roll-shaped orthogonal filtering element of the kind shown e.g. in Figure 2 of US 2,599,604 or Figure 3 of WO 83/01582. The belt conveyer 121, 123, 125 can be replaced by a different kind of endless conveyer, for instance a motorised roller conveyer. In the preceding description, it has been made reference to a so-called "paper to be cured", i.e. a paper for filters which has to be cured in oven in order to release the phenol contained therein; however the process according to the invention can be applied to the manufacture of the so-called "cold" papers, i.e. papers which do not need to be cured in oven for properly producing a filter. The embodiments and the lists of the possible variants of the present invention are to be intended as non-exhaustive lists.

## Claims

1. Process for manufacturing so-called orthogonal filters (1), wherein:
- an orthogonal filter (1) comprises a filtering element (3), which in its turn comprises a plurality of corrugated sheets (103') of filtering material and a plurality of non-corrugated sheets (107) of filtering material;
- each corrugated sheet (103') of filtering material is superimposed on and alternates with a non-corrugated sheet (107) of filtering material, so as to form a stack or pack; the stack or pack forms an upstream face (6), a downstream face (4) and sides extending between the upstream face and the downstream face;
- the corrugations of each corrugated sheet (103') of filtering material form a plurality of crests and troughs respectively arranged side by side and extending from the upstream face (6) to the downstream face (4);
- for each corrugated sheet (103') the ends of the crests and troughs formed by a predetermined face of that sheet are closed at the upstream face (6) and open at the downstream face (4), while the ends of the crests and troughs formed by the face opposite to the predetermined face of the same corrugated sheet are closed at the downstream face (4) and open at the upstream face (6), so as to force the fluid, which is to be filtered and flows from the upstream face (6) towards the downstream face (4), to cross the filtering material before leaving the filter; and wherein the process comprises the steps of:
- producing each corrugated sheet (103') of filtering material, and
- bonding each of said corrugated sheets (103') of filtering material to a non-corrugated sheet (107) of filtering material;
said process being **characterised in that** it further comprises the following steps:
- producing each corrugated sheet (103') of filtering material by folding and pushing one or more sheets (103) of filtering material into a folding channel (113) through at least two folding knives (111A, 111B) which carry out translation, or combined rotation and translation, movements wherein during the folding operation said at least two folding knives (111A, 111B) are arranged on opposite sides relative to the one or more sheets (103) of filtering material which is being corrugated;
- adjusting the corrugation height (H) of said corrugated sheet (103') of filtering material, by reversibly varying the distance between the plates (115A, 115B) in the height direction of the folding channel (113) and/or the travel of the knives (111A, 111B) in a direction perpendicular to the direction along which the folding channel (113) extends; and
- increasing the width (LC, LV) of the crests and troughs of each corrugated sheet (103') folded by the at least two folding knives (111A, 111B) and exiting from said folding channel (113), by accelerating a portion of that corrugated sheet (103').

2. Process according to claim 1, wherein a portion of each corrugated sheet (103') is decelerated after having accelerated it, so as to give to the corrugation crests and troughs of that sheet the width (LC, LV) which is substantially required in the finished orthogonal filter (1).

3. Process according to one or more of the preceding claims, further comprising the operations of:
- laying sealing glue (8) along an edge of each corrugated sheet (103'), the edge being transverse to the crests and troughs of that sheet, after the width (LC, LV) of said crests and troughs has been brought to the value desired in the finished orthogonal filter (1);
- superimposing a non-corrugated sheet (107) of filtering material on each corrugated sheet (103') of filtering material, so that the sealing glue (8) substantially closes, at said edge, the ends of the channels formed by said crests and troughs.

4. Process according to one or more preceding claims, further comprising the steps of:
- superimposing a non-corrugated sheet (107) of filtering material on each corrugated sheet (103') of filtering material, and gluing and/or welding the two sheets together;
- heating the two sheets (103', 107) so as to eliminate or reduce the possible paper elastic returns due to the folding thereof.

5. Apparatus for manufacturing so-called orthogonal filters (1), comprising:
- a bonding system (117, 119, 129) arranged for bonding a second non-corrugated sheet (107) of filtering material to a first corrugated sheet (103') of filtering material; said apparatus being **characterised in that** it comprises:
- at least a folding channel (113);
- at least two folding knives (111A, 111B) arranged for carrying out translation or combined translation and rotation movements so as to fold and push into the folding channel said first sheet (103) of filtering material to be corrugated which passes between the two folding knives (111A, 111B), so as to form a series of crests and troughs respectively arranged side by side on such first sheet;
- an adjustment system for adjusting the height (H) of the corrugations of the first sheet (103') of filtering material, by reversibly varying the distance between the plates (115A, 115B) in the height direction of the folding channel (113) and/or reversibly varying the travel of the knives (111A, 111B) in a direction which is perpendicular to the direction in which the folding channel (113) extends; and
- a corrugation adjustment system (121, 123, 125) arranged for varying the width (LC, LV) of the crests and troughs of said first sheet (103') made of filtering material, which is folded by said folding knives (111A, 111B) and exits from said folding channel (113) while accelerates a portion of said corrugated sheet (103').

6. Apparatus according to claim 5, wherein the bonding system further comprises at least a first dispenser (117), arranged for laying sealing glue (8) along an edge of the corrugated sheet (103') of filtering material, wherein such edge is transverse to the crests and troughs of the first sheet (103') of filtering material.

7. Apparatus according to claim 6, wherein the first dispenser (117) is arranged for laying the sealing glue (8) so as to substantially close in a leak-tight manner the ends of the channels formed by the crests and troughs at the edge of the first sheet (103') of filtering material along which the sealing glue (8) is being supplied, when the second non-corrugated sheet (107) is superimposed on the first corrugated sheet (103').

8. Apparatus according to one or more claims 5 to 7, further comprising at least a second dispenser (129) arranged for laying tacking glue (9) on each non-corrugated sheet (107) of filtering material, so as to prevent the first (103') and second corrugated sheet (107) from opening like a book.

9. Apparatus according to any of claims 5 to 8, wherein the corrugation adjustment system comprises an endless conveyer (121, 123, 125) arranged for dragging and conveying the first corrugated sheet (103') of filtering material, and comprising a first section (123) arranged for widening the crests and troughs of the first corrugated sheet (103') of filtering material by accelerating said first sheet (103'), and a second section (125) arranged for narrowing the crests and troughs of the first corrugated sheet (103') of filtering material by decelerating said first sheet (103').

10. Apparatus according to any of claims 5 to 9, wherein the corrugation adjustment system comprises one or more belt conveyers (121, 123, 125) and/or one or more roller conveyers.
